# EUROPÄISCHE PATENTSCHRIFT

(11) **EP 1 948 474 B1**
(45) Veröffentlichungstag und Bekanntmachung des Hinweises auf die Patenterteilung: **15.09.2010**
(21) Anmeldenummer: 07730176.0
(22) Anmeldetag: 14.06.2007
(51) Int. Cl.: B60N 2/28, B60N 2/42, B60N 2/70, F16F 1/37, B60R 21/04

(54) **VORRICHTUNG ZUR ENERGIEABSORPTION**
ENERGY ABSORPTION DEVICE
DISPOSITIF D'ABSORPTION D'ÉNERGIE

(30) Priorität: 10.07.2006 DE 202006010876 U
(43) Veröffentlichungstag der Anmeldung: 30.07.2008
(73) Patentinhaber: Takata-Petri AG, 63743 Aschaffenburg (DE)
(72) Erfinder: NETT, Reiner, 63739 Aschaffenburg (DE); PORRMANN, Volker, 63739 Aschaffenburg (DE); BOLL, Rüdiger, 63856 Keilberg-Bessenbach (DE)
(74) Vertreter: Baumgärtel, Gunnar
(86) Internationale Anmeldenummer: PCT/EP2007/055929
(87) Internationale Veröffentlichungsnummer: WO 2008/006664

(56) Entgegenhaltungen:
- WO-A-94/17995
- WO-A-97/38237
- DE-C1- 10 156 621
- JP-A- 59 053 271
- US-A1- 2003 137 176

## Beschreibung

Die Erfindung betrifft eine Vorrichtung zur Energieabsorption nach dem Oberbegriff des Anspruchs 1 oder 2 und einen Kraftfahrzeugsitz nach dem Oberbegriff des Anspruchs 14.

Das Dokument US-A-2003/0137176 beschreibt einen Schaumstoffkern, der mit einer Hülle aus Frotteestoff überzogen werden kann.

Eine Vorrichtung zur Energieabsorption ist beispielsweise aus der DE 43 33 499 A1 in Form eines Polsters bekannt. Dieses Polster ist aus einem Federelement aufgebaut, welches sich mit Vorspannung an einer Hülle abstützt. Die Hülle besteht dabei aus flexiblem Material mit einem vorbestimmten Luftdurchlass. Wird das Federelement komprimiert, entweicht Luft, die zuvor im Federelement enthalten war, durch die Hülle aus dem Polster heraus.

Das flexible Hüllenmaterial, das dieses Polster umgibt, bringt den Nachteil mit sich, dass eine möglichst großflächige Kraftbeaufschlagung des Polsters erfolgen muss, um eine Ausdehnung des komprimierten Polstermaterials an nicht kraftbeaufschlagten Punkten des Polsters zu vermeiden. Ein solches Polster eignet sich daher nicht zur punktuellen oder kleinflächigen Energieabsorption.

Der vorliegenden Erfindung liegt die Aufgabe zugrunde, eine Vorrichtung zur Energieabsorption zu schaffen, die Energie auch dann wirksam absorbiert, wenn die zu absorbierende Energie punktuell oder in einem kleinflächigen Bereich der Vorrichtung auf die Vorrichtung einwirkt.

Diese Aufgabe wird mit einer Vorrichtung zur Energieabsorption mit den Merkmalen des Anspruchs 1 gelöst. Demnach weist eine solche Vorrichtung einen elastischen Kern aus einem elastischen Material und eine Hülle, die den elastischen Kern umschließt, auf, wobei die Hülle aus einem biegeweichen, dehnsteifen Material besteht und mindestens eine Strömungsvorrichtung aufweist, durch welche im elastischen Kern enthaltene Luft bei einer Komprimierung des elastischen Kerns entweicht und bei einer Expansion des elastischen Kerns in den elastischen Kern strömt. Die Strömungsvorrichtung ist dabei in Form mindestens einer Verbindungsstelle zwischen einem Hüllenelement oder mehreren Hüllenelementen der Hülle ausgebildet, so dass Luft durch die Verbindungsstelle aus dem elastischen Kern entweichen bzw. in den elastischen Kern strömen kann. Auf diese Weise ist es möglich, eine Strömungsvorrichtung in die Hülle zu integrieren, ohne dafür einen zusätzlichen Arbeitsschritt aufwenden zu müssen.

Alternativ ist die Strömungsvorrichtung durch die Hülle vermittels luftdurchlässiger Eigenschaften des Materials der Hülle gebildet, so dass Luft durch das Material der Hülle aus dem elastischen Kern entweichen bzw. in den elastischen Kern strömen kann. Das heißt, die Strömungsvorrichtung wird in diesem Fall durch das Hüllenmaterial selbst gebildet, und zwar durch dessen luftdurchlässige Eigenschaften. Das heißt, dass weder eine luftdurchlässige Verbindungsstelle noch eine luftdurchlässige Aussparung in der Hülle gebildet werden müssen, wenn das Hüllenmaterial selbst luftdurchlässige Eigenschaften aufweist. Luftdurchlässige Eigenschaften hat ein Hüllenmaterial beispielsweise dann, wenn es luftdurchlässige Poren aufweist.

Als dehnsteif im Sinne dieser Erfindung wird ein Material verstanden, dass nur sehr wenig dehnelastisch ist und vorzugsweise einen Elastizitäts-Modul (E-Modul) von mindestens 3 GPa aufweist.

Um ein Reißen des Materials auch bei hohen Belastungen zu vermeiden, weist das Material der Hülle vorzugsweise eine hohe Zugfestigkeit auf. Diese Zugfestigkeit drückt sich insbesondere in einer zulässigen Zugspannung des Materials von mehr als ca. 70 N/mm² aus.

Durch das dehnsteife Material der Hülle der Vorrichtung zur Energieabsorption führt eine Einwirkung von Energie in einzelnen Bereichen der Vorrichtung nicht zu einer Ausdehnung des elastischen Kerns an den anderen Bereichen der Vorrichtung, auf die keine zu absorbierende Energie einwirkt. Die Vorrichtung eignet sich daher insbesondere dazu, Energie, die von einem menschlichen Körper aufgebracht wird, zumindest teilweise zu absorbieren. Bei einer solchen Energie kann es sich beispielsweise um eine Beschleunigungs- oder Abbremsenergie, die auf einen Fahrzeuginsassen wirkt, handeln. Die Vorrichtung ist demgemäß bevorzugt so ausgestaltet, dass sie sich zum Einbau in Kraftfahrzeug eignet.

Die Vorrichtung ist vorzugsweise derart dimensioniert, dass sie in einen Fahrzeugsitz integriert werden kann. Insbesondere im Bereich der Sitzfläche, der Seitenlehne und/oder der Rückenlehne eines Fahrzeugsitzes kann die Vorrichtung zur Energieabsorption ein herkömmliches Polster ersetzen oder ergänzen. Dabei bietet es sich an, die Vorrichtung zur Energieabsorption zusätzlich zu der den elastischen Kern umschließenden Hülle mit einer weiteren Hülle zu versehen. Dies kann beispielsweise ein üblicher Fahrzeugsitzstoff sein.

In einer bevorzugten Ausgestaltung der Erfindung ist die Vorrichtung in einen Kindersitz integriert und ersetzt oder ergänzt im Bereich der Sitzfläche, der Seitenlehne und/oder der Rückenlehne die herkömmlichen, im Kindersitz vorhandenen Polster.

Die erfindungsgemäßen Anforderungen an ein Hüllenmaterial werden beispielsweise von einem biegeweichen, dehnsteifen Gewebe erfüllt, das aus Polyamidgarn besteht. Dieses Gewebe kann beschichtet oder unbeschichtet sein, wobei sich als Material zur Beschichtung insbesondere Silikon eignet. Prinzipiell sind auch andere dehnsteife Materialien wie beispielsweise Polyestergewebe einsetzbar.

Die Hülle kann ein- oder mehrteilig ausgeführt sein. Ist sie mehrteilig ausgeführt, können die einzelnen Hüllenteile bzw. Hüllenelemente miteinander durch Nähen, Kleben und/oder Verschweißen verbunden werden.

Die den elastischen Kern umschließende Hülle ist vorzugsweise aus einem Hüllenelement geformt, kann aber auch mehrteilig ausgeführt sein. Eine Verbindungsstelle zwischen den Teilbereichen der Hülle tritt sowohl bei einteiliger als auch bei mehrteiliger Ausführung der Hülle auf. Bei mehrteiliger Ausführung der Hülle ist eine Verbindungsstelle beispielsweise zwischen zwei Hüllenhälften angeordnet. Bei einteiliger Ausführung der Hülle ist eine Verbindungsstelle insbesondere an den miteinander verbundenen Rändern des Hüllenelements ausgebildet. Eine solche Verbindungsstelle kann insbesondere eine Naht zwischen den Teilbereichen der Hülle sein.

In einer alternativen Ausgestaltung der Erfindung ist die Strömungsvorrichtung durch mindestens eine Aussparung in der Hülle gebildet. Eine solche Aussparung kann beispielsweise eine Ausstanzung, ein Durchbruch oder eine sonstige Öffnung im Hüllenmaterial sein.

Es ist auch denkbar, dass eine oder mehrere der zuvor genannten Ausgestaltungen sowie weitere mögliche Ausgestaltungen einer Strömungsvorrichtung kombiniert werden.

Die Strömungsvorrichtung ist bevorzugt derart ausgestaltet, dass das Luftvolumen, welches die Strömungsvorrichtung in einem definierten Zeitintervall passieren kann, gesteuert werden kann. Eine solche Steuerung kann beispielsweise durch ein Ventil, welches einen definierten Luftdurchsatz erlaubt und auf eine Aussparung in der Hülle gesetzt ist, erfolgen.

Die Erfindung umfasst auch einen Kraftfahrzeugsitz, der eine Vorrichtung zur Energieabsorption aufweist. Die Energieabsorptionsvorrichtung ist dabei vorzugsweise als Polster im Bereich der Sitzfläche, der Seitenlehne und/oder der Rückenlehne in den Kraftfahrzeugsitz integriert.

In einer Variante der Erfindung ist der Kraftfahrzeugsitz ein Kindersitz. In diesem Fall ist es neben den zuvor genannten Anordnungsmöglichkeiten im Bereich der Sitzfläche, der Seitenlehne und/oder der Rückenlehne ebenfalls denkbar, dass die Vorrichtung zur Energieabsorption als Seitenpolster des Kindersitzes verwendet wird.Weitere Vorteile und Einzelheiten der Erfindung sollen anhand der Darstellung zweier Ausführungsbeispiele näher erläutert werden. Es zeigen:
- Fig. 1: einen Querschnitt durch ein Ausführungsbeispiel der erfindungsgemäßen Vorrichtung zur Energieabsorption und
- Fig. 2: einen erfindungsgemäßen Kindersitz, dessen Seitenflächen mit einer Vorrichtung zur Energieabsorption gepolstert sind.

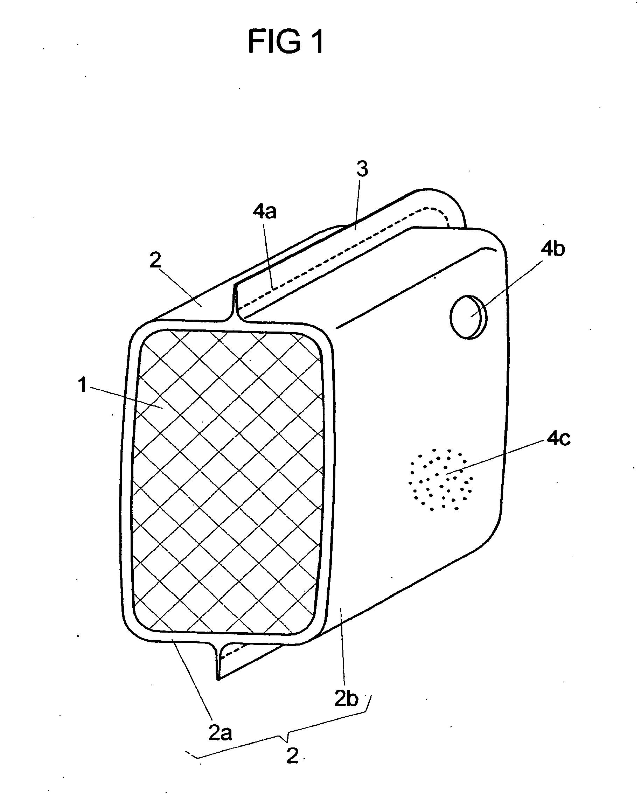

Figur 1 zeigt eine schematische Querschnittsdarstellung durch ein Polsterelement als Energieabsorptionsvorrichtung mit einem Schaumstoffkern 1 als elastischem Kern und einer Hülle 2, die den Schaumstoffkern umgibt. Das Polsterelement ist Teil eines Kraftfahrzeugsitzes. Es bildet zumindest einen Teil der Rückenlehne, der Seitenlehne und/oder der Sitzfläche des Kraftfahrzeugsitzes. Das Polsterelement kann das einzige Polster des Kraftfahrzeugsitzes sein oder ein herkömmliches Polster in der Rückenlehne, der Seitenlehne und/oder der Sitzfläche des Kraftfahrzeugsitzes ergänzen.

Die Hülle 2 besteht aus einem ersten flächigen Teilsegment 2a und einem zweiten flächigen Teilsegment 2b, welche jeweils Hüllenelemente der Hülle 2 darstellen, die in einem Verbindungsbereich 3 flach aneinander anliegen. Im Verbindungsbereich 3 sind das erste Teilsegment 2a und das zweite Teilsegment 2b der Hülle 2 miteinander durch eine Naht 4a, welche eine Verbindungsstelle darstellt, verbunden.

Die Teilsegmente 2a, 2b der Hülle bestehen aus einem silikonbeschichteten technischen Gewebe aus Polyamidgarn (Polyamidgewebe), das auch als Airbaggewebe eingesetzt wird. Dieses Hüllenmaterial weist den Vorteil auf, dass es biegeweich, aber nur wenig dehnelastisch ist. So liegt der Elastizitätsmodul (E-Modul) des Polyamidgewebes bei mehr als 3 GPa. Andere Materialen mit vergleichbaren Eigenschaften eigenen sich ebenso als Hüllenmaterial. So kann beispielsweise auch ein unbeschichtetes Polyamidgewebe oder ein Polyestergewebe verwendet werden. Vorteilhafterweise weist das zu verwendende Material auch eine hohe Zugfestigkeit auf.

Neben der verbindenden Funktion der Naht 4a stellt diese auch eine Strömungsverbindung zwischen dem Inneren der Hülle 2 und dem Äußeren der Hülle 2 dar. Wird der Schaumstoffkern 1 komprimiert, kann aus dem Schaumstoffkern 1 entweichende Luft durch die Naht 4a aus dem Polsterelement nach außen entweichen.

Neben der Möglichkeit, eine Strömungsvorrichtung zum Luftausgleich zwischen dem Inneren des Polsterelements und dem Äußeren des Polsterelements in Form der Naht 4a vorzusehen, zeigt die Figur 1 auch noch zwei weitere Möglichkeiten für die Ausgestaltung einer Strömungsvorrichtung. So weist die Hülle 2 eine kreisförmige Öffnung 4b auf, durch die ebenfalls Luft aus dem Inneren des Polsterelements in die Umgebung entweichen kann. Zusätzlich zu der einen Öffnung 4b könnten auch weitere Öffnungen in der Hülle vorgesehen sein.

Diese Ausgestaltung der Strömungsvorrichtung durch eine oder mehrere Öffnungen (4b) ist jedoch nicht Gegenstand der Erfindung.

Eine weitere Möglichkeit zur Ausgestaltung der Strömungsvorrichtung besteht darin, als Material für die Hülle 2 ein luftdurchlässiges Material zu verwenden. Dies ist in der Figur 1 durch die skizzenhaft dargestellten Poren 4c angedeutet.

Während in der Figur 1 zwei verschiedene Möglichkeiten für die Ausgestaltung einer Strömungsvorrichtung dargestellt sind, nämlich in Form einer Naht 4a und in Form von Poren 4c im Hüllenmaterial, ist es auch möglich, dass eine erfindungsgemäße Vorrichtung zur Energieabsorption nur eine dieser dargestellten Strömungsvorrichtungen aufweist. Ebenso ist eine Kombination zweier verschiedener Strömungsvorrichtungen denkbar.

In einer Variante könnte beispielsweise eine luftdichte Naht zwischen den beiden Hüllensegmenten 2a und 2b ausgebildet sein bzw. eine andere luftdichte Verbindung der beiden Hüllensegmente 2a und 2b erfolgen. Auch wäre es denkbar, dass die Hülle nicht aus mehreren Hüllensegmenten 2a, 2b besteht, sondern einstückig ausgebildet ist.

Die Komforteigenschaften des in der Figur 1 dargestellten Polsterelements sind leicht einstellbar. So können verschiedene Schaumstoffmaterialien für den Schaumstoffkern 1 verwendet werden.

Zur Einstellung der Energieabsorptionsfähigkeit des Polsterelements, welche durch das Ausströmen von Luft aus dem Schaumstoffkern 1 bedingt ist, können die Strömungsvorrichtungen variabel gestaltet und den jeweils gewünschten Eigenschaften des Polsterelements angepasst werden.

Durch eine vollständig reversible elastische Rückstellung des Kernmaterials des Schaumstoffkerns 1 wird Luft, die bei einer Kompression des Schaumstoffkerns 1 aus diesem durch die Naht 4a und/oder die Poren 4c im Hüllenmaterial aus dem Polsterelement entweicht, bei einer Entlastung des Schaumstoffkerns 1 wieder durch die Naht 4a und/oder die Poren 4c im Hüllenmaterial zurück in den Schaumstoffkern 1 geführt:

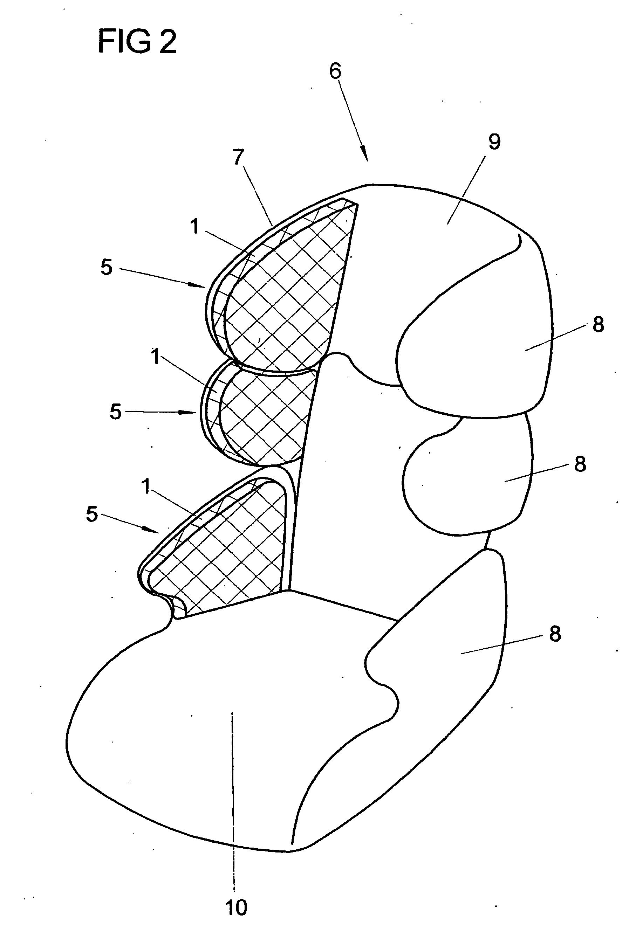

Die Figur 2 zeigt ein Anwendungsbeispiel einer erfindungsgemäßen Vorrichtung zur Energieabsorption, wie sie in der Figur 1 dargestellt wurde, als Seitenpolster 5 eines Kindersitzes 6. Zur Verdeutlichung ist in der Darstellung der Figur 2 lediglich der Schaumstoffkern 1 der Vorrichtung zur Energieabsorption abgebildet, während eine Hülle 2, die den Schaumstoffkern 1 umgibt, nicht abgebildet ist. Gleichwohl wird die Hülle 2 beim Einsatz der Energieabsorptionsvorrichtung als Seitenpolster 5 oder als anderes Polsterelement eingesetzt; ein Einsatz ohne Hülle 2 ist nicht vorgesehen.

In der Darstellung der Figur 2 weist der Kindersitz 6 darüber hinaus nur auf der Innenseite seiner rechten Seitenlehne 7 Seitenpolster 5 auf. Dies ist nur beispielhaft zu verstehen. So ist vorteilhafterweise auch eine Anordnung einer erfindungsgemäßen Vorrichtung zur Energieabsorption als Seitenpolster an der Innenseite der linken Seitenlehne 8 des Kindersitzes 6 vorgesehen.

Ferner wird eine erfindungsgemäße Vorrichtung zur Energieabsorption vorzugsweise zusätzlich zur oder anstelle der Anordnung an den Seitenlehnen 7,8 des Kindersitzes 6 auch im Bereich der Rückenlehne 9 und/oder der Sitzfläche 10 des Kindersitzes 6 angeordnet. Auf diese Weise ist es möglich, die auf ein Kind, welches in dem Kindersitz 6. sitzt, einwirkende Energie, die beispielsweise infolge eines Bremsens, einer plötzlichen Richtungsänderung oder auch nur der gewöhnlichen Fortbewegung eines Kraftfahrzeugs, in welchem sich der Kindersitz 6 befindet, aufgebracht wird, an zahlreichen Stellen des Kindersitzes 6 zu absorbieren. Dadurch erhöht sich der Sitzkomfort in dem Kindersitz 6 erheblich gegenüber einer Variante mit weniger Polstern oder Polstern mit ungünstigeren Eigenschaften der Energieabsorption.

Für die Wirkungsweise der Vorrichtung zur Energieabsorption ist es von untergeordneter Bedeutung, ob die Seitenlehnen 7,8, die Rückenlehne 9 und/oder die Sitzfläche 10 ein- oder mehrteilig ausgestaltet sind. Diese Ausgestaltung kann nach ergonomischen und/oder ästhetischen Gesichtpunkten erfolgen.

### Bezugszeichenliste

- 1: Schaumstoffkern
- 2: Hülle
- 2a: erstes Teilsegment der Hülle
- 2b: zweites Teilsegment der Hülle
- 3: Verbindungsbereich
- 4a: Naht
- 4b: Öffnung
- 4c: Poren
- 5: Seitenpolster
- 6: Kindersitz
- 7: rechte Seitenlehne
- 8: linke Seitenlehne
- 9: Rückenlehne
- 10: Sitzfläche

## Patentansprüche

1. Vorrichtung zur Energieabsorption, mit einem Luft enthaltenden elastischen Kern (1) aus einem elastischen Material und einer Hülle (2), die den elastischen Kern (1) umschließt und die mindestens eine Strömungsvorrichtung (4a, 4c) aufweist, durch welche die im elastischen Kern (1) enthaltene Luft bei einer Komprimierung des elastischen Kerns (1) in den Raum außerhalb der Hülle (2) entweicht und bei einer Expansion des elastischen Kerns (1) in den von der Hülle (2) umschlossenen Raum strömt, wobei die Hülle (2) aus einem biegeweichen, dehnsteifen Material besteht,
**dadurch gekennzeichnet,**
**dass** die Hülle (2) aus mindestens einem Hüllenelement (2a, 2b) besteht und dass die Strömungsvorrichtung (4a, 4c) in Form mindestens einer Verbindungsstelle (4a) zwischen den Hüllenelementen (2a, 2b) oder dem Hüllenelement (2a, 2b) der Hülle (2) ausgebildet ist, so dass Luft durch die Verbindungsstelle (4a) aus dem elastischen Kern (1) entweichen bzw. in den elastischen Kern (1) strömen kann..

2. Vorrichtung zur Energieabsorption, mit einem Luft enthaltenden elastischen Kern (1) aus einem elastischen Material und einer Hülle (2), die den elastischen Kern (1) umschließt und die mindestens eine Strömungsvorrichtung (4a, 4c) aufweist, durch welche die im elastischen Kern (1) enthaltene Luft bei einer Komprimierung des elastischen Kerns (1) in den Raum außerhalb der Hülle (2) entweicht und bei einer Expansion des elastischen Kerns (1) in den von der Hülle (2) umschlossenen Raum strömt, wobei die Hülle (2) aus einem biegeweichen, dehnsteifen Material besteht,
**dadurch gekennzeichnet,**
**dass** die Strömungsvorrichtung (4a, 4c) durch die Hülle (2) vermittels luftdurchlässiger Eigenschaften des Materials der Hülle (2) gebildet ist, so dass Luft durch das Material der Hülle (2) aus dem elastischen Kern (1) entweichen bzw. in den elastischen Kern (1) strömen kann.

3. Vorrichtung zur Energieabsorption nach Anspruch 1 oder 2, **dadurch gekennzeichnet, dass** das Material der Hülle (2) einen Elastizitätsmodul von 3 GPa oder mehr aufweist.

4. Vorrichtung zur Energieabsorption nach einem der vorhergehenden Ansprüche, **dadurch gekennzeichnet, dass** das Material der Hülle (2) eine zulässige Zugspannung von mindestens 70 N/mm² aufweist.

5. Vorrichtung zur Energieabsorption nach einem der vorhergehenden Ansprüche, **dadurch gekennzeichnet, dass** die die Vorrichtung zum Einbau in ein Kraftfahrzeug vorgesehen und eingerichtet ist, um Energie, die von mindestens einem Fahrzeuginsassen infolge einer auf diesen wirkenden Beschleunigung aufgebracht wird, zumindest teilweise zu absorbieren.

6. Vorrichtung zur Energieabsorption nach einem der vorhergehenden Ansprüche, **dadurch gekennzeichnet, dass** die Vorrichtung in einen Fahrzeugsitz integriert ist.

7. Vorrichtung zur Energieabsorption nach Anspruch 6, **dadurch gekennzeichnet, dass** der Fahrzeugsitz ein Kindersitz (6) ist.

8. Vorrichtung zur Energieabsorption nach Anspruch 6 oder 7, **dadurch gekennzeichnet, dass** die Vorrichtung in den Fahrzeugsitz im Bereich der Sitzfläche (10), der Seitenlehne (7) und/oder der Rückenlehne (9) integriert ist.

9. Vorrichtung zur Energieabsorption nach einem der vorhergehenden Ansprüche, **dadurch gekennzeichnet, dass** das Material der Hülle (2) ein Polyamidgewebe ist.

10. Vorrichtung zur Energieabsorption nach Anspruch 1, **dadurch gekennzeichnet, dass** die Verbindungsstelle (4a) eine Naht ist.

11. Vorrichtung zur Energieabsorption nach einem der vorhergehenden Ansprüche, sofern nicht rückbezogen auf Anspruch 2, **dadurch gekennzeichnet, dass** die Strömungsvorrichtung (4a, 4c) durch die Hülle (2) vermittels luftdurchlässiger Eigenschaften des Materials der Hülle (2) gebildet ist, so dass Luft durch das Material der Hülle (2) aus dem elastischen Kern (1) entweichen bzw. in den elastischen Kern (1) strömen kann.

12. Vorrichtung zur Energieabsorption nach einem der vorhergehenden Ansprüche, **dadurch gekennzeichnet, dass** die Strömungsvorrichtung (4a, 4c) derart ausgestaltet ist, dass das Luftvolumen, welches die Strömungsvorrichtung (4a, 4c) in einem Zeitintervall passieren kann, steuerbar ist.

13. Kraftfahrzeugsitz, aufweisend eine Vorrichtung zur Energieabsorption nach einem der vorhergehenden Ansprüche.

14. Kraftfahrzeugsitz nach Anspruch 13, **dadurch gekennzeichnet, dass** der Kraftfahrzeugsitz ein Kindersitz (6) ist.

## Claims

1. Energy absorption device, with an elastic core (1) which contains air and is composed of an elastic material and a covering (2) which encloses the elastic core (1) and which has at least one flow device (4a, 4c) through which the air contained in the elastic core (1) escapes into the space outside the covering (2) when the elastic core (1) is compressed and flows into the space enclosed by the covering (2) when the elastic core (1) expands, wherein the covering (2) is composed of a flexible, expansion-resistant material,
**characterized in that**
the covering (2) consists of at least one covering element (2a, 2b) and **in that** the flow device (4a, 4c) is formed at at least one connecting point (4a) between the covering elements (2a, 2b) or the covering element (2a, 2b) of the covering (2) such that air can escape from the elastic core (1) or can flow into the elastic core (1) through the connecting point (4a).

2. Energy absorption device, with an elastic core (1) which contains air and is composed of an elastic material and a covering (2) which encloses the elastic core (1) and which has at least one flow device (4a, 4c) through which the air contained in the elastic core (1) escapes into the space outside the covering (2) when the elastic core (1) is compressed and flows into the space enclosed by the covering (2) when the elastic core (1) expands, wherein the covering (2) is composed of a flexible, expansion-resistant material,
**characterized in that**
the flow device (4a, 4c) is formed by the covering (2), by means of air-permeable properties of the material of the covering (2), such that air can escape from the elastic core (1) or can flow into the elastic core (1) through the material of the covering (2).

3. Energy absorption device as claimed in claim 1 or 2, **characterized in that** the material of the covering (2) has a modulus of elasticity of 3 GPa or more.

4. Energy absorption device as claimed in any of the preceding claims, **characterized in that** the material of the covering (2) has a permissible tensile stress of at least 70 N/mm².

5. Energy absorption device as claimed in any of the preceding claims, **characterized in that** the device is provided for installation in a motor vehicle and is arranged in order to at least partially absorb energy which is applied by at least one vehicle occupant as a consequence of an acceleration acting on him.

6. The energy absorption device as claimed in any of the preceding claims, **characterized in that** the device is integrated in a vehicle seat.

7. The energy absorption device as claimed in claim 6, **characterized in that** the vehicle seat is a child seat (6).

8. The energy absorption device as claimed in claim 6 or 7, **characterized in that** the device is integrated in the vehicle seat in the region of the seat surface (10), the side rest (7) and/or the backrest (9).

9. The energy absorption device as claimed in any of the preceding claims, **characterized in that** the material of the covering (2) is a polyamide fabric.

10. The energy absorption device as claimed in claim 1, **characterized in that** the connecting point (4a) is a seam.

11. The energy absorption device as claimed in any of the preceding claims, as far as not referring back to claim 2, **characterized in that** the flow device (4a, 4c) is formed by the covering (2), by means of air-permeable properties of the material of the covering (2), such that air can escape from the elastic core (1) or can flow into the elastic core (1) through the material of the covering (2).

12. The energy absorption device as claimed in any of the preceding claims, **characterized in that** the flow device (4a, 4c) is configured in such a manner that the volume of air which can pass through the flow device (4a, 4c) within a period of time can be controlled.

13. A motor vehicle seat having an energy absorption device as claimed in any of the preceding claims.

14. The motor vehicle seat as claimed in claim 13, **characterized in that** the motor vehicle seat is a child seat (6).

## Revendications

1. Dispositif d'absorption d'énergie, comprenant un coeur élastique (1) contenant de l'air, réalisé en matériau élastique, et une enveloppe (2) qui enferme le coeur élastique (1) et qui comporte au moins un dispositif d'écoulement (4a, 4c), via lequel l'air contenu dans le coeur élastique (1) s'échappe lors d'une compression du coeur élastique (1) vers l'espace à l'extérieur de l'enveloppe (2) et s'écoule lors d'une expansion du coeur élastique (1) vers l'espace enfermé par l'enveloppe (2), ladite enveloppe (2) étant en un matériau souple à la flexion et résistant à l'allongement,
**caractérisé en ce que**
l'enveloppe (2) est composée d'au moins un élément d'enveloppe (2a, 2b), et **en ce que** le dispositif d'écoulement (4a, 4c) est réalisé sous la forme d'au moins un emplacement de liaison (4a) entre les éléments d'enveloppe (2a, 2b) ou l'élément d'enveloppe (2a, 2b) de l'enveloppe (2), de sorte que l'air peut s'échapper hors du coeur élastique (1) ou respectivement s'écouler vers le coeur élastique (1) via l'emplacement de liaison (4a).

2. Dispositif d'absorption d'énergie, comprenant un coeur élastique (1) contenant de l'air, réalisé en matériau élastique, et une enveloppe (2) qui enferme le coeur élastique (1) et qui comporte au moins un dispositif d'écoulement (4a, 4c), via lequel l'air contenu dans le coeur élastique (1) s'échappe lors d'une compression du coeur élastique (1) vers l'espace à l'extérieur de l'enveloppe (2) et s'écoule lors d'une expansion du coeur élastique (1) vers l'espace enfermé par l'enveloppe (2), ladite enveloppe (2) étant en un matériau souple à la flexion et résistant à l'allongement,
**caractérisé en ce que**
le dispositif d'écoulement (4a, 4c) est réalisé à par l'enveloppe (2) en mettant à profit des propriétés de perméabilité à l'air du matériau de l'enveloppe (2), de sorte que l'air peut s'échapper hors du coeur élastique (1) ou respectivement s'écouler vers le coeur élastique (1) à travers le matériau de l'enveloppe (2).

3. Dispositif d'absorption d'énergie selon la revendication 1 ou 2, **caractérisé en ce que** le matériau de l'enveloppe (2) présente un module d'élasticité de 3 GPa ou plus.

4. Dispositif d'absorption d'énergie selon l'une des revendications précédentes, **caractérisé en ce que** le matériau de l'enveloppe (2) présente une contrainte de traction admissible d'au moins 70 N/mm².

5. Dispositif d'absorption d'énergie selon l'une des revendications précédentes, **caractérisé en ce que** le dispositif est prévu pour l'intégration dans un véhicule automobile et est conçu pour absorber au moins partiellement l'énergie qui est appliquée à un occupant du véhicule suite à une accélération agissant sur celui-ci.

6. Dispositif d'absorption d'énergie selon l'une des revendications précédentes, **caractérisé en ce que** le dispositif est intégré dans un siège de véhicule.

7. Dispositif d'absorption d'énergie selon la revendication 6, **caractérisé en ce que** le siège du véhicule et un siège pour enfants (6).

8. Dispositif d'absorption d'énergie selon la revendication 6 ou 7, **caractérisé en ce que** le dispositif est intégré dans le siège de véhicule dans la région de la surface d'assise (10), des soutiens latéraux (7) et/ou du dossier (9).

9. Dispositif d'absorption d'énergie selon l'une des revendications précédentes, **caractérisé en ce que** le matériau de l'enveloppe (2) est un tissu en polyamide.

10. Dispositif d'absorption d'énergie selon la revendication 1, **caractérisé en ce que** l'emplacement de liaison (4a) est une couture.

11. Dispositif d'absorption d'énergie selon l'une des revendications précédentes, dans la mesure où elle n'est pas rattachée à la revendication 2, **caractérisé en ce que** le dispositif d'écoulement (4a, 4c) est réalisé par l'enveloppe (2) en mettant à profit des propriétés de perméabilité à l'air du matériau de l'enveloppe (2), de sorte que l'air peut s'échapper hors du coeur élastique (1) ou s'écouler vers le coeur élastique (1) à travers le matériau de l'enveloppe (2).

12. Dispositif d'absorption d'énergie selon l'une des revendications précédentes, **caractérisé en ce que** le dispositif d'écoulement (4a, 4c) est conçu de telle façon que le volume d'air qui peut traverser le dispositif d'écoulement (4a, 4c) dans un intervalle temporel est susceptible d'être commandé.

13. Siège de véhicule automobile, comprenant un dispositif d'absorption d'énergie selon l'une des revendications précédentes.

14. Siège de véhicule automobile selon la revendication 13, **caractérisé en ce que** le siège de véhicule est un siège pour enfants (6).
